# NEUE EUROPÄISCHE PATENTSCHRIFT

(11) **EP 3 798 686 B2**
(45) Veröffentlichungstag und Bekanntmachung des Hinweises auf die Entscheidung über den Einspruch: **05.08.2026**
(45) Hinweis auf die Patenterteilung: 06.04.2022
(21) Anmeldenummer: 20186611.8
(22) Anmeldetag: 20.07.2020
(51) Int. Cl.: G01V 8/12, F21V 13/00, G02B 6/42

(54) **OPTOELEKTRONISCHER SENSOR**
OPTOELECTRONIC SENSOR AND OPTICAL ELEMENT
CAPTEUR OPTOÉLECTRONIQUE ET ÉLÉMENT OPTIQUE

(30) Priorität: 27.09.2019 DE 102019126084
(43) Veröffentlichungstag der Anmeldung: 31.03.2021
(73) Patentinhaber: SICK AG, 79183 Waldkirch (DE)
(72) Erfinder: WIETHEGE, Friedhelm, 79350 Sexau (DE); WÜLKER, Fabian Tobias, 77793 Gutach (DE); ALBERT, Michael, 77955 Ettenheim (DE)

(56) Entgegenhaltungen:
- WO-A1-2017/094279
- DE-A1- 10 228 677
- DE-U1- 202012 102 729
- GB-A- 1 383 911
- JP-A- S59 210 411
- US-A1- 2014 226 330
- US-A1- 2018 210 084

## Beschreibung

Die vorliegende Erfindung betrifft einen optoelektronischen Sensor gemäß dem Oberbegriff von Anspruch 1.

Bei bestehenden Auskoppelverfahren weist der Lichtfleck meist eine asymmetrische Geometrie auf. Durch einen asymmetrischen Lichtfleck kann die Detektionseigenschaft des Sensors negativ beeinflusst werden. Bei bestehenden Auskoppelverfahren wird ein Lichtfleck beispielsweise asymmetrisch beschnitten, wodurch sich eine nachteilige Lichtfleckgeometrie ergibt. Durch einen asymmetrischen Lichtfleck kann die Messeigenschaft des optoelektronischen Sensors negativ beeinfluss werden.

Die DE 20 2012 102 729 U1 offenbart einen optoelektronischen Sensor zur Erfassung von Objekten in einem Überwachungsbereich, der einen Lichtsender zum Aussenden von Sendelicht, einen Lichtempfänger zum Erzeugen eines Empfangssignals aus von Objekten in dem Überwachungsbereich reflektiertem Sendelicht, eine Auswertungseinheit zur Bestimmung von Informationen über Objekte in dem Überwachungsbereich anhand des Empfangssignals sowie ein optisches Element mit einer ersten Grenzfläche und einer zweiten Grenzfläche, welches im Strahlengang des Sendelichts oder des reflektierten Sendelichts derart angeordnet ist, dass zumindest ein Teil des Sendelichts als Detektionslicht in den Überwachungsbereich gelangt, wobei die erste Grenzfläche und die zweite Grenzfläche zumindest lokal nicht zueinander parallel sind.

Bei der Lichtleitung über Spiegelflächen bzw. Grenzflächen wird viel Bauraum benötigt. Weiter geht an den Spiegelflächen bzw. Grenzflächen Streulicht verloren.

Die GB 1 383 911 A offenbart eine beleuchtete Tafel. Die Tafel wird mittels Lichtleitern beleuchtet, die jeweils in einer Öffnung in einer transparenten Folie enden und lenkt Licht auf eine polierte konvexe zylindrische Oberfläche in der Peripherie der Öffnung, wodurch das Licht durch die gesamte Tafel gebrochen wird und die Zeichen beleuchtet werden, die auf der Unterseite der Folie getragen werden und durch die Öffnung in der Maske sichtbar sind.

Die US 2014/0226330 A1 offenbart eine lichtemittierende Vorrichtung mit einem Substrat mit ersten und zweiten Leistungsanschlüssen, wobei das Substrat so konstruiert und angeordnet ist, dass es einen Innenbereich zumindest teilweise umgibt, wobei das Substrat eine Innenfläche hat, die dem Innenbereich zugewandt ist, und eine Außenfläche gegenüber dem Innenbereich angeordnet ist; und mehrere lichtemittierende Elemente, die auf der Außenfläche des flexiblen Substrats positioniert und elektrisch mit dem ersten und zweiten Stromanschluss verbunden sind, wobei die mehreren lichtemittierenden Elemente auf der äußeren Oberfläche so positioniert sind, dass erste und zweite der lichtemittierenden Elemente angeordnet sind um Lichtstrahlung zu emittieren, die im Wesentlichen in erste und zweite unterschiedliche radiale Richtungen relativ zu dem inneren Bereich ausgerichtet sind.

Die JP S59 210 411 A offenbart eine platzsparende ebene Lichtquelle mit hoher Helligkeit und Homogenität, indem Licht von einer Leuchtstoffröhre zu einem Lichtleitersystem geleitet wird, das aus transparentem Material mit einem größeren Brechungsindex als Luft besteht und einen keilförmigen Querschnitt aufweist. Eine Glaswand ist mit einem reflektierenden Film und einer fluoreszierenden Materialschicht beschichtet und ein Öffnungsteil ist gebildet, um eine Leuchtstofflampe zu erhalten, von der Licht zu dem keilförmigen Lichtleitsystem aus transparentem Material geleitet wird mit einem größeren Brechungsindex als Luft. Eine reflektierende Oberfläche wird mit einem Sägezahnabschnitt oder einer Streuoberfläche gebildet, und der größte Teil des Lichtstroms wird von der reflektierenden Oberfläche und einem ebenen Teil projiziert, wodurch die platzsparende ebene Lichtquelle mit hoher Helligkeit erhalten wird.

Die US 2018/0210084 A1 offenbart einen optoelektronischen Sensor zur Bestimmung der Entfernung eines Objekts; mit einem Lichtsender zum Aussenden eines Lichtimpulses; mit einem SPAD-Lichtempfänger mit einem Messempfangselement und einem Referenzempfangselement; und mit einer Auswerteeinheit, die dazu eingerichtet ist, eine Laufzeit zwischen dem Aussenden des Lichtpulses und dem Empfangen des remittierten Lichtpulses und daraus den Abstand des Objekts zu den empfangenen Signalen des Messempfangselements und der Referenz zu bestimmen.

Die EP 3 255 456 A1 offenbart eine optische Sensoranordnung für eine Lichtlaufzeitmessung. Diese umfasst einen ersten und einen zweiten Hohlraum, die durch eine optische Barriere getrennt und durch eine Abdeckungsanordnung abgedeckt sind. In der ersten Kavität ist ein optischer Emitter, in der zweiten Kavität ein Mess- und ein Referenzphotodetektor angeordnet.

Die WO 2017/94279 A1 offenbart einen Photosensor. Dieser Photosensor ist ausgestattet mit einem Licht emittierenden Element das Licht in Richtung eines zu erfassenden Objekts emittiert, einem optischen Element, das einen Teil des von dem Licht emittierenden Element emittierten Lichts durchlässt und einen anderen Teil des von dem Licht emittierenden Element emittierten Lichts reflektiert.

Die DE 102 28 677 A1 offenbart eine Laserabstandsmesseinrichtung mit einem Lichtsignale in einen Messkanal aussendenden Lichtsender und einem optoelektronischen Messempfänger zum Empfangen der an einem Objekt reflektierten Lichtsignale, einer Auswerteschaltung zur Bestimmung des Objektabstandes aus der zwischen Aussendung und Empfang verstrichenen Lichtsignallaufzeit, mit einem in vorgegebenem Abstand zum Lichtsender angeordnetem Referenzempfänger, der zumindest einen Anteil der vom Lichtsender ausgesendeten Lichtsignale unmittelbar, d. h. ohne Reflexion am Objekt empfängt.

Weitere Dokumente zum Stand der Technik sind: EP 1 152 259 A2, DE 20 2013 105 389 U1, DE 10 2012 107 329 A1, DE 10 2015 207 567 A1, EP 1 903 352 A1, DE 41 26 601 A1, EP 2 565 603 A2 und EP 2 957 876 A1.

Eine Aufgabe der Erfindung besteht darin, Licht aus dem Sendepfad auszukoppeln und in ausreichender Intensität auf ein Referenzelement zu leiten. Dabei sollte der Sendestrahlquerschnitt nicht negativ beeinflusst werden. Weiter soll der für die Auskopplung des Sendelichts benötigte Bauraum so gering wie möglich gehalten werden.

Die Aufgabe wird gemäß Anspruch 1 gelöst.

Das optische Element wird zwischen Sendeelement und einer Kollimatorlinse angeordnet. Der Lichtleiter des optischen Elements kann in beliebiger Form ausgeführt sein, wodurch der Referenzlichtempfänger in verschiedenen Positionen angeordnet sein kann. Der transparente Lichtleiter liegt dabei beispielsweise senkrecht zur optischen Achse des Sendelichts. Ein Einkoppelelement des Lichtleiters liegt dabei im Bereich des Sendelichtstrahles. Ein Auskoppelbereich des Lichtleiters liegt dabei an der Empfangsfläche des Referenzlichtempfängers. Der Lichtleiter basiert auf dem Effekt der Totalreflexion an den Grenzflächen. Nach dem Eintritt des Lichtes in den Lichtleiter wird das Licht mehrfach an den Grenzflächen total reflektiert und gelangt schließlich über den Auskoppelbereich auf den Referenzlichtempfänger. Der Lichtleiter ist vorzugsweise scheibenförmig bzw. flach ausgebildet, wobei sich eine Hauptebene des scheibenförmigen bzw. flachen Lichtleiters vorzugsweise senkrecht zur optischen Achse des Sendelichts befindet.

Der Lichtleiter besteht aus einem für das Sendelicht transparentem Material, welches beispielsweise zur Grenzfläche Luft zur Totalreflexion führt. Beispielsweise besteht der Lichtleiter aus Kunststoff. Jedoch kann der Lichtleiter auch beispielsweise aus Glas bestehen.

Um die Blendenfunktion zu gewährleisten, befindet sich die Blende auf einer dem Lichtsender abgewandten Seite oder Fläche des optischen Elements. Die Blende ist ebenfalls vorzugsweis senkrecht zur optischen Achse des Sendelichts angeordnet. Die Blende besteht aus einem lichtundurchlässigen Material. Vorzugsweise weist die Blende eine reflektierende Oberfläche auf, welche zu dem Lichtsender hin angeordnet ist. Zwischen der Blende und dem Lichtsender ist der Lichtleiter angeordnet. Die Oberfläche des Lichtleiters kann im Bereich der Blende entsprechend ausgeformt sein, um eine Einkopplung eines Teils des Sendelichts in den Lichtleiter zu begünstigen. Durch die Blende werden Reflexe aus dem Lichtsender aufgefangen bzw. abgedeckt und aus dem Sendebereich ferngehalten. Weiter wird durch die Blende eine Beleuchtung von Randbereichen der, Kollimatorlinse verhindert, da diese Bereiche durch die Blende abgedeckt sind. Dadurch wird Streulicht und eine damit verbundene Verschlechterung des Lichtflecks vermieden.

Der Bauraum, um Licht aus dem Sendebereich auszukoppeln, ist gemäß der Erfindung minimiert und damit gering. Der Querschnitt des Sendelichtstrahls des Lichtsenders wird nicht negativ beeinflusst. Die Blende unterliegt keinen Beschränkungen durch den Lichtleiter, wodurch die Blendenfunktion uneingeschränkt gegeben ist. Das optische Element erfüllt die Blenden- und Lichtleiterfunktion. Dadurch ist ein Synergieeffekt erzielt. Dadurch wird die Anzahl der Teile verringert und die Montage des Sensors vereinfacht, wodurch der Sensor preiswerter herstellbar ist.

Durch eine optionale stoffschlüssige Verbindung zwischen Blende und Lichtleiter sind die Blende und der Lichtleiter bereits zueinander ausgerichtet und fixiert.

Der Referenzlichtempfänger empfängt das Referenzlicht und ist mit der Steuer- und Auswerteeinheit verbunden. Der Lichtempfänger ist ebenfalls mit der Steuer- und Auswerteeinheit verbunden.

Der Lichtsender ist dabei optional in einer ersten Gehäusekammer und der Lichtempfänger in einer zweiten getrennten Gehäusekammer angeordnet. Die Gehäusekammern sind optisch isoliert, so dass keine direkte optische Verbindung zwischen Lichtsender und Lichtempfänger vorhanden ist. Lediglich an einem Objekt reflektiertes bzw. remittiertes Licht des Lichtsenders gelangt auf den Lichtempfänger. Auch der Referenzlichtempfänger und der Lichtempfänger sind in getrennten Gehäusekammer angeordnet, die optisch voneinander getrennt sind.

In Weiterbildung ist die Öffnung der Blende eine kreisrunde Öffnung Der Lichtquerschnitt von Lichtsendern, beispielsweise Leuchtdioden ist häufig oval, häufig mit Toleranzen behaftet oder beispielsweise häufig undefiniert in den Randbereichen. Durch die kreisrunde Öffnung der Blende wird ein kreisrunder Lichtstrahl erzeugt. Der kreisrunde Lichtstrahl wird beispielsweise über die Linse, bzw. die Kollimatorlinse auf ein Objekt projiziert. Der Lichtfleck auf dem Objekt wird wiederum auf dem Lichtempfänger detektiert und führt zu einem Objektfeststellungssignal, welches durch die Steuer- und Auswerteeinheit generiert wird.

In Weiterbildung der Erfindung ist das optische Element mit dem Lichtleiter und der Blende als Zweikomponenten-Spritzgussteil hergestellt. Dadurch kann das optische Element in einem Arbeitsschritt hergestellt werden, wodurch das optische Element sehr preiswert herstellbar ist.

In Weiterbildung der Erfindung ist die Blende eine Blendenfolie oder eine Blechblende. Dabei sind der Lichtleiter und die Blendenfolie bzw. die Blechblende zwei Teile, die zusammengefügt werden. Dadurch können beispielsweise auch unterschiedliche Blenden und unterschiedliche Lichtleiter einfach miteinander kombiniert werden. Der Lichtleiter und die Blendenfolie bzw. die Blechblende können beispielsweise stoffschlüssig gefügt werden.

In Weiterbildung ist die Blende eine lichtundurchlässige Beschichtung des Lichteiters. Dadurch kann die Blende sehr einfach realisiert werden. Im einfachsten Fall kann die Blende beispielsweise bedruckt, aufgedampft oder lackiert werden. Dadurch kann das optische Element sehr preiswert hergestellt werden. Dadurch, dass die Blende eine Beschichtung ist, kann die Blende und damit der Rand der Blende, welche die Öffnung der Blende bildet, sehr präzise ausgeführt werden. Der Rand der Blende weist dadurch auch eine spitze, kreisförmige Kante auf.

Gemäß der Erfindung weist der Lichtleiter an einer Einkoppelstelle für das Sendelicht, diffraktive und/oder refraktive Strukturen auf. Diese Strukturen verbessern die Wirkung der Einkoppelstelle. Refraktive Strukturen können beispielsweise Linsenelemente aufweisen.

In Weiterbildung der Erfindung weist das optische Elemente Fixierelemente auf, um das optische Element im optoelektronischen Sensor zu positionieren. Die Fixierelemente sind optional einstückig mit dem optischen Element verbunden. Bevorzugt sind die Fixierelemente aus dem gleichen Material wie der Lichtleiter, beispielsweise Kunststoff und beispielsweise in einem Kunststoffspritzgussverfahren hergestellt. Die Fixierelemente erlauben beispielsweise eine formschlüssige Verbindung des optischen Elements bzw. des Lichtleiters mit dem Gehäuse und/oder Gehäuseteilen und/oder einem Tubus und/oder einer Leiterplatte des optoelektronischen Sensors.

In Weiterbildung ist die Steuer- und Auswerteeinheit dazu ausgebildet, anhand des Signals des Referenzlichtempfängers eine Referenzmessung durchzuführen.

Das Licht des Lichtempfängers ist beispielsweise mit Störlicht beaufschlagt, jedoch das Referenzlicht des Referenzlichtempfängers nicht. Dadurch kann beispielsweise Störlicht durch den Sensor identifiziert werden.

Weiter kann der genaue Zeitpunkt des Aussendens von Licht an dem Lichtsender durch den Referenzlichtempfänger festgestellt werden.

In Weiterbildung der Erfindung ist der optoelektronische Sensor ein entfernungsmessender Lichttaster nach dem Lichtlaufzeitprinzip, wobei die Steuer- und Auswerteeinheit dafür ausgebildet ist, einen Objektabstand aus einer Lichtlaufzeit zwischen Aussenden des Sendelichts und Empfang des reflektierten Sendelichts zu bestimmen.

Dabei werden Lichtimpulse oder beispielsweise Lichtimpulsgruppen ausgesendet.

Lichtlaufzeitmesssysteme ermöglichen die Entfernungsmessung durch Bestimmung der Zeitdifferenz zwischen Aussenden des Lichts und Zurückkommen des vom Messobjekt reflektierten Lichts. Mit der Referenzmessung wird der Zeitpunkt des Aussendens des Lichts bestimmt. Für die Lichtlaufzeitmessung ist es vorteilhaft, wenn eine optische Referenzmessung vorliegt, wodurch die Genauigkeit der Referenzmessung erhöhtwird. Dazu wird das Licht durch das optische Element, bzw. den Lichtleiter ausgekoppelt und auf die Referenzdetektionsfläche des Referenzlichtempfängers geleitet. Damit kann die Lichtlaufzeit sehr genau bestimmt werden, da der exakte Zeitpunkt der Lichtaussendung und dergenaue Zeitpunkt des Lichtempfangs der Steuer- und Auswerteeinheit bekannt sind.

Durch das optische Element wird das Licht in ausreichender Intensität auf den Referenzlichtempfänger geleitet, wodurch eine präzise und stabile Lichtlaufzeitmessung ermöglicht wird.

Der Lichtempfänger ist beispielsweise ein Lawinenphotodiodenelement. Optional kann auch der Referenzlichtempfänger ein Lawinenphotodiodenelement sein.

Somitistoptional ein optoelektronischer Sensor gebildet zur Bestimmung der Entfernung eines Objekts in dem Überwachungsbereich nach einem pulsbasierten Lichtlaufzeitverfahren mit einem Lichtsender zum Aussenden eines Lichtpulses, mit einem Lichtempfänger, wobei mindestens ein Lawinenphotodiodenelement als Messempfangselement ausgebildet ist und den von dem Objekt remittierten Lichtpuls empfängt und mindestens ein Lawinenphotodiodenelement als Referenzempfangselement ausgebildet ist und einen Teil des ausgesandten Lichtpulses innerhalb des Sensors als Referenzpuls empfängt sowie mit der Steuer- und Auswerteeinheit, die dafür ausgebildet ist, aus den Empfangssignalen des Messempfangselements und des Referenzempfangselements eine Lichtlaufzeit zwischen Aussenden des Lichtpulses und Empfangen des remittierten Lichtpulses und daraus den Abstand des Objekts zu bestimmen.

Der Lichtempfänger kann auch als Einzelphotonenlawinendiode (Single Photon Avalanche Diode) ausgebildet sein, bzw. aus einem Array aus Einzelphotonenlawinendioden. Einzelphotonenlawinendioden werden auch synonym als ,Single Photon Avalanche Diode' kurz SPAD bezeichnet. Andere gängige Bezeichnungen sind ,Silicon Photomultiplier' (SiPM), ,Geigermode Avalanche Photon Diode' oder ,Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10⁶ können bereits geringste Empfangsleistungen bis zu Einzelphotonen detektiert werden.

Zur Entfernungsmessung sind verschiedene Lichtlaufzeitverfahren mit einer entsprechenden Auswertung implementierbar.

Beispielsweise arbeitet der Lichtlaufzeitsensor nach einem direkte Lichtlaufzeitverfahren (dTOF), wonach kurze Lichtpulse oder Lichtpulsgruppen ausgesandt werden und die Zeit bis zum Empfang einer Remission oder Reflexion der Lichtpulse an einem Objekt gemessen wird. Die Lichtsignale sind dabei durch Lichtpulse gebildet.

Jedoch sind auch andere Lichtlaufzeitverfahren möglich, beispielsweise das Phasenverfahren, wonach Sendelicht amplitudenmoduliert ist und eine Phasenverschiebung zwischen Sende- und Empfangslicht bestimmt wird, wobei die Phasenverschiebung ebenfalls ein Maß für die Lichtlaufzeit ist (indirektes Lichtlaufzeitverfahren, iTOF).

Weiter kann ein CW-Verfahren (Continuous Wave) bzw. das synonyme Dauerstrich-Verfahren eingesetzt werden, wobei ein zeitlich konstantes Lichtsignal eingesetzt wird. Bei diesem Verfahren werden beispielsweise über ein Gating-Signal die Einzelphotonenevents in zwei Zähler verteilt und aus dem Verhältnis der Zählerstände eine Phase berechnet.

Bei dem mindestens einen Lichtsender handelt es sich bevorzugt um eine Laserdiode. Dabei handelt es sich beispielsweise um VCSEL Laserdioden, welche ein sehr gutes Preis-/Leistungsverhältnis aufweisen.

Es kann ein Pulsverfahren vorgesehen sein. Beispielsweise sind ein oder mehrere Zeitzu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung. Durch den Amplitudenwert kann eine Plausibilitätsprüfung, insbesondere bei sicherheitstechnischen Anwendungen durchgeführt werden.

Die Verwendung von Einzelphotonenlawinendioden bietet folgende Vorteile: Einzelphotonenlawinendioden sind in einem Standard CMOS Prozess herstellbar. Damit ist der Lichttaster hoch integrierbar, z. B. als ASIC. Der Lichtsender, beispielsweise ein VSCEL, eine Laserdiode oder eine Leuchtdiode und die Steuer- und Auswerteeinheit bzw. eine getrennte Lichtsenderansteuerung sind ebenfalls auf dem Chip integrierbar.

Vorzugsweise ist das Sendelicht Laserlicht. Dadurch können kollimierte Lichtstrahlen erzeugt werden, die eine hohe Lichtenergie aufweisen und auf eine bestimmte Wellenlänge begrenzt sind.

In Weiterbildung der Erfindung ist die Steuer- und Auswerteeinheit dafür ausgebildet, die Lichtlaufzeit anhand der Referenzmessung zu korrigieren, wodurch eine genauere Lichtlaufzeitmessung möglich ist. Der Referenzlichtpfad bzw. die Länge des Referenzlichtpfades ist bekannt, so dass zeitliche Verschiebungen aufgrund von Driften erfasst und kompensiert werden können.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen erfindungsgemäßen optoelektronischen Sensor;
- Figur 2: einen Lichtleiter des optischen Elements;
- Figur 3: ein erfindungsgemäßes optisches Element;
- Figur 4: eine Blende und einen Lichtleiter des optischen Elements;
- Figur 5: einen Querschnitt des optischen Elements gemäß Figur 3;
- Figur 6: einen optoelektronischen Sensor mit dem optischen Element und einem optischen Referenzpad.

In den nachfolgenden schematischen Figuren sind identische Teile mit identischen Bezugszeichen versehen.

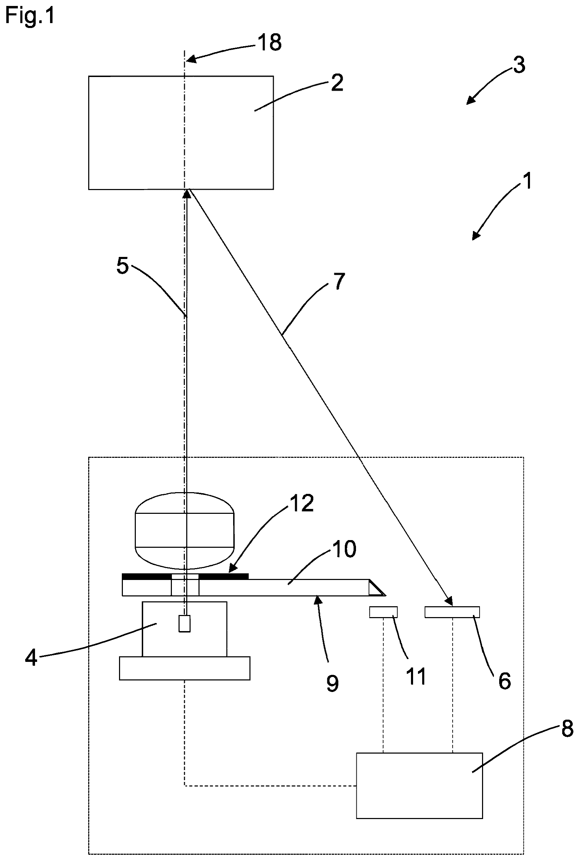

Figur 1 zeigt einen optoelektronischen Sensor 1 zur Erfassung von Objekten 2 in einem Überwachungsbereich 3, der einen Lichtsender 4 zum Aussenden von Sendelicht 5, einen Lichtempfänger 6 zum Erzeugen eines Empfangssignals aus von Objekten 2 in dem Überwachungsbereich 3 reflektiertem Sendelicht, eine Steuer- und Auswerteeinheit 8 zur Bestimmung von Informationen über Objekte 2 in dem Überwachungsbereich 3 anhand des Empfangssignals sowie ein optisches Element 9 aufweist, welches im Strahlengang des Sendelichts 5 derart angeordnet ist, dass zumindest ein Teil des Sendelichts als Detektionslicht in den Überwachungsbereich 3 gelangt, wobei das optische Element 9 einen transparenten Lichtleiter 10 aufweist, der einen Teil des Sendelichts auf einen Referenzlichtempfänger 11 leitet und das optische Element 9 eine Blende 12 mit einer Öffnung für das Sendelicht 5 aufweist.

Der Referenzlichtempfänger 11 empfängt das Referenzlicht und ist mit der Steuer- und Auswerteeinheit 8 verbunden. Der Lichtempfänger 6 ist ebenfalls mit der Steuer- und Auswerteeinheit 8 verbunden.

Der Lichtsender 4 ist dabei optional in einer ersten Gehäusekammer und der Lichtempfänger in einer zweiten getrennten Gehäusekammer angeordnet. Die Gehäusekammern sind optisch isoliert, so dass keine direkte optische Verbindung zwischen Lichtsender 4 und Lichtempfänger 6 vorhanden ist. Lediglich an einem Objekt 2 reflektiertes bzw. remittiertes Licht des Lichtsenders 4 gelangt als Empfangslicht 7 auf den Lichtempfänger 6. Auch der Referenzlichtempfänger 11 und der Lichtempfänger 6 sind in getrennten Gehäusekammern angeordnet, die optisch voneinander getrennt sind.

Gemäß Figur 1 ist die Steuer- und Auswerteeinheit 8 dazu ausgebildet, anhand des Signals des Referenzlichtempfängers 11 eine Referenzmessung durchzuführen.

Das Licht des Lichtempfängers 6 ist beispielsweise mit Störlicht beaufschlagt, jedoch das Referenzlicht des Referenzlichtempfängers 11 nicht. Dadurch kann beispielsweise Störlicht durch den optoelektronischen Sensor 1 bzw. die Steuer und Auswerteeinheit 8 identifiziert werden.

Weiter kann der genaue Zeitpunkt des Aussendens von Licht an dem Lichtsender 4 durch den Referenzlichtempfänger 11 festgestellt werden.

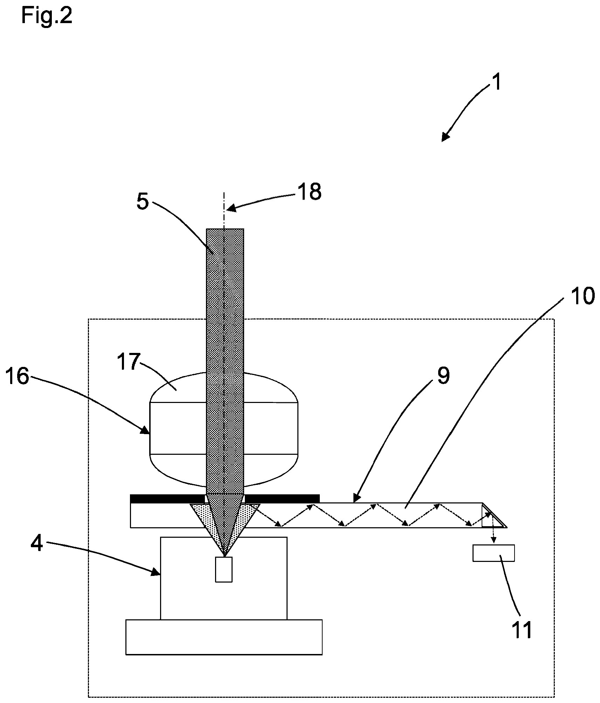

Gemäß Figur 2 ist das optische Element 9 zwischen Lichtsender 4 bzw. einem Sendeelement und einer Kollimatorlinse 17 angeordnet. Der Lichtleiter 10 des optischen Elements 9 kann in beliebiger Form ausgeführt sein, wodurch der Referenzlichtempfänger 11 in verschiedenen Positionen angeordnet sein kann. Der transparente Lichtleiter 10 liegt dabei beispielsweise senkrecht zur optischen Achse 18 des Sendelichts 5. Ein Einkoppelelement des Lichtleiters 10 liegt dabei im Bereich des Sendelichtstrahles 5. Ein Auskoppelbereich des Lichtleiters 10 liegt dabei an der Empfangsfläche des Referenzlichtempfängers 11. Der Lichtleiter 10 basiert auf dem Effekt der Totalreflexion an den Grenzflächen des Lichtleiters 10. Nach dem Eintritt des Lichtes in den Lichtleiter 10 wird das Licht mehrfach an den Grenzflächen beispielsweise total reflektiert und gelangt schließlich über den Auskoppelbereich auf den Referenzlichtempfänger 11.

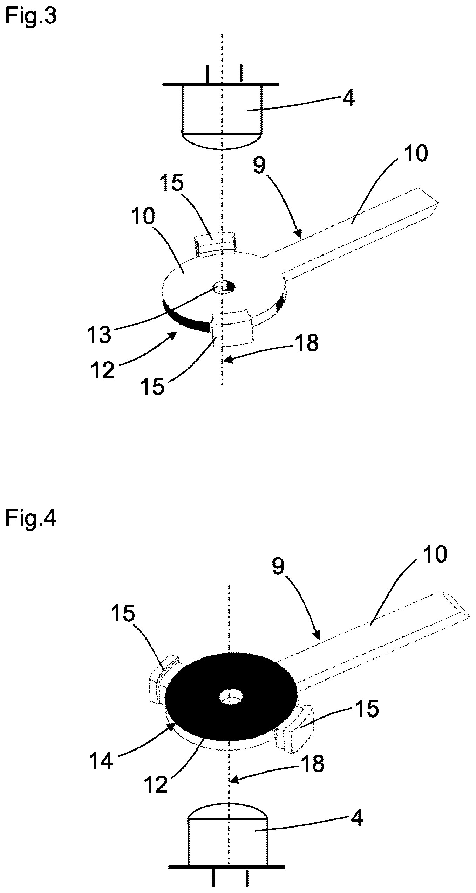

Figur 3 zeigt das erfindungsgemäße optische Element 9, welches im Strahlengang von Sendelicht 5 eines Lichtsenders 4 derart angeordnet ist, dass ein Teil des Sendelichts 5 als Detektionslicht in einen Überwachungsbereich 3 gelangt, wobei das optische Element 9 einen transparenten Lichtleiter 10 aufweist, der einen Teil des Sendelichts 5 auf einen Referenzlichtempfänger 11 leitet und das optische Element 9 eine Blende 12 mit einer Öffnung 13 für das Sendelicht 5 aufweist.

Gemäß Figur 3 ist der Lichtleiter 10 vorzugsweise scheibenförmig bzw. flach ausgebildet, wobei sich eine Hauptebene des scheibenförmigen bzw. flachen Lichtleiters 10 vorzugsweise senkrecht zur optischen Achse 18 des Sendelichts befindet.

Der Lichtleiter 10 besteht aus einem für das Sendelicht transparentem Material, welches zur Grenzfläche Luft zur Totalreflexion führt. Beispielsweise besteht der Lichtleiter 10 aus Kunststoff.

Gemäß Figur 3 weist das optische Element 9 Fixierelemente 15 auf, um das optische Element 9 im optoelektronischen Sensor zu positionieren. Die Fixierelemente 15 sind optional einstückig mit dem optischen Element 9 verbunden. Bevorzugt sind die Fixierelemente 15 aus dem gleichen Material wie der Lichtleiter 10, beispielsweise Kunststoff und beispielsweise in einem Kunststoffspritzgussverfahren hergestellt. Die Fixierelemente 15 erlauben beispielsweise eine formschlüssige Verbindung des optischen Elements 9 bzw. des Lichtleiters 10 mit dem Gehäuse und/oder Gehäuseteilen und/oder einem Tubus und/oder einer Leiterplatte des optoelektronischen Sensors 1.

Figur 4 zeigt das optische Element 9 mit dem Lichtleiter 10 und der Blende 12. Um die Blendenfunktion zu gewährleisten, befindet sich die Blende 12 auf einer dem Lichtsender 4 abgewandten Seite oder Fläche des optischen Elements 9. Die Blende 12 ist ebenfalls vorzugsweis senkrecht zur optischen Achse 18 des Sendelichts angeordnet. Die Blende 12 besteht aus einem lichtundurchlässigen Material. Vorzugsweise weist die Blende 12 eine reflektierende Oberfäche auf, welche zu dem Lichtsender 4 hin angeordnet ist.

Zwischen der Blende 12 und dem Lichtsender 4 ist der Lichtleiter 10 angeordnet. Die Oberfläche des Lichtleiters 10 kann im Bereich der Blende 12 entsprechend ausgeformt sein, um eine Einkopplung eines Teils des Sendelichts in den Lichtleiter 10 zu begünstigen. Durch die Blende 12 werden Reflexe aus dem Lichtsender 4 aufgefangen bzw. abgedeckt und aus dem Sendebereich ferngehalten. Weiter wird durch die Blende 12 eine Beleuchtung von Randbereichen der Kollimatorlinse verhindert, da diese Bereiche durch die Blende 12 abgedeckt sind. Dadurch wird Streulicht und eine damit verbundene Verschlechterung des Lichtflecks vermieden.

Durch eine optionale stoffschlüssige Verbindung zwischen Blende 12 und Lichtleiter 10 sind die Blende 12 und der Lichtleiter 10 bereits zueinander ausgerichtet und fixiert. Gemäß Figur 3 und Figur 4 ist die Öffnung 13 der Blende 12 eine kreisrunde Öffnung. Der Lichtquerschnitt von Lichtsendern 4, beispielsweise Leuchtdioden ist häufig oval, häufig mit Toleranzen behaftet oder beispielsweise häufig undefiniert in den Randbereichen. Durch die kreisrunde Öffnung 13 der Blende 12 wird ein kreisrunder Lichtstrahl erzeugt. Der kreisrunde Lichtstrahl wird über die Kollimatorlinse auf ein Objekt projiziert. Der Lichtfleck auf dem Objekt wird wiederum auf dem Lichtempfänger detektiert und führt zu einem Objektfeststellungssignal, welches durch die Steuer- und Auswerteeinheit generiert wird.

Gemäß Figur 4 ist die Blende 12 eine lichtundurchlässige Beschichtung 14 des Lichteiters 10. Im einfachsten Fall kann die Blende 12 beispielsweise bedruckt, aufgedampft oder lackiert werden. Dadurch, dass die Blende 12 eine Beschichtung ist, kann die Blende 12 und damit der Rand der Blende 12, welche die Öffnung der Blende 12 bildet, sehr präzise ausgeführt werden. Der Rand der Blende 12 weist dadurch auch eine spitze, kreisförmige Kante auf.

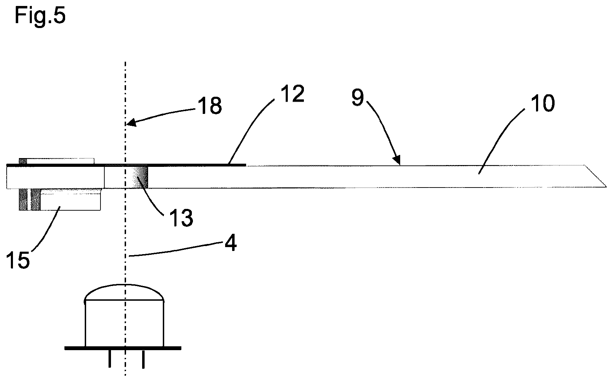

Figur 5 zeigt eine Seitenansicht des optischen Elements gemäß Figur 4.

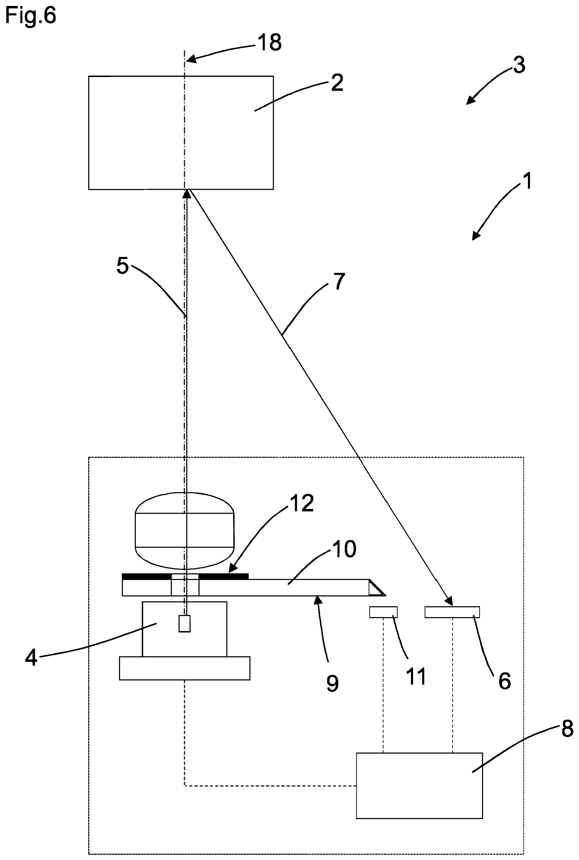

Gemäß Figur 6 ist der optoelektronische Sensor 1 ein entfernungsmessender Lichttaster nach dem Lichtlaufzeitprinzip, wobei die Steuer- und Auswerteeinheit 8 dafür ausgebildet ist, einen Objektabstand aus einer Lichtlaufzeit zwischen Aussenden des Sendelichts und Empfang des reflektierten Sendelichts zu bestimmen. Dabei werden Lichtimpulse oder beispielsweise Lichtimpulsgruppen ausgesendet.

Lichtlaufzeitmesssysteme ermöglichen die Entfernungsmessung durch Bestimmung der Zeitdifferenz zwischen Aussenden des Lichts und Zurückkommen des vom Messobjekt reflektierten Lichts. Mit der Referenzmessung wird der Zeitpunkt des Aussendens des Lichts bestimmt.

Der Lichtempfänger 6 ist beispielsweise ein Lawinenphotodiodenelement. Optional kann auch der Referenzlichtempfänger 11 ein Lawinenphotodiodenelement sein.

Der Lichtempfänger 6 kann auch als Einzelphotonenlawinendiode (Single Photon Avalanche Diode) ausgebildet sein, bzw. aus einem Array aus Einzelphotonen Zur Entfernungsmessung sind verschiedene Lichtlaufzeitverfahren mit einer entsprechenden Auswertung implementierbar.

Gemäß Figur 6 ist das Sendelicht 5 Laserlicht.

Gemäß Figur 6 ist die Steuer- und Auswerteeinheit 8 dafür ausgebildet, die Lichtlaufzeit anhand der Referenzmessung zu korrigieren, wodurch eine genauere Lichtlaufzeitmessung möglich ist.

### Bezugszeichen:

- 1: optoelektronischer Sensor
- 2: Objekte
- 3: Überwachungsbereich
- 4: Lichtsender
- 5: Sendelicht
- 6: Lichtempfänger
- 7: Empfangslicht
- 8: Steuer- und Auswerteeinheit
- 9: optisches Element
- 10: Lichtleiter
- 11: Referenzlichtempfänger
- 12: Blende
- 13: Öffnung
- 14: Beschichtung
- 15: Fixierelemente
- 16: Linse
- 17: Kollimatorlinse
- 18: optische Achse

## Patentansprüche

1. Optoelektronischer Sensor (1) zur Erfassung von Objekten (2) in einem Überwachungsbereich (3), der einen Lichtsender (4) zum Aussenden von Sendelicht (5), einen Lichtempfänger (6) zum Erzeugen eines Empfangssignals aus von Objekten (2) in dem Überwachungsbereich reflektiertem Sendelicht (5), eine Steuer- und Auswerteeinheit (8) zur Bestimmung von Informationen über Objekte (2) in dem Überwachungsbereich (3) anhand des Empfangssignals sowie ein optisches Element (9) aufweist, welches im Strahlengang des Sendelichts (5) des Lichtsenders (4) derart angeordnet ist, dass ein Teil des Sendelichts (5) als Detektionslicht in den Überwachungsbereich (3) gelangt,
**dadurch gekennzeichnet, dass**
das optische Element (9) einen transparenten Lichtleiter (10) aufweist, der einen Teil des Sendelichts (5) auf einen Referenzlichtempfänger (11) leitet und das optische Element (9) eine Blende (12) mit einer Öffnung (13) für das Sendelicht (5) aufweist, wobei der optoelektronische Sensor (1) eine Kollimatorlinse (17) aufweist, wobei das optische Element (9) zwischen Lichtsender (4) und der Kollimatorlinse (17) angeordnet ist, wobei der Lichtleiter (10) auf dem Effekt der Totalreflexion an Grenzflächen basiert, wobei sich die Blende (12) auf einer dem Lichtsender (4) abgewandten Seite oder Fläche des optischen Elements (9) befindet, wobei zwischen der Blende (12) und dem Lichtsender (4) der Lichtleiter (10) angeordnet ist, wobei nach Eintritt des Lichtes in den Lichtleiter (10) das Licht mehrfach an den Grenzflächen total reflektiert wird und schließlich über einen Auskoppelbereich auf den Referenzlichtempfänger (11) gelangt, wobei der Lichtleiter (10) an einer Einkoppelstelle für das Sendelicht diffraktive und/oder refraktive Strukturen aufweist.

2. Optoelektronischer Sensor (1) nach Anspruch 1, **dadurch gekennzeichnet, dass** die Öffnung (13) eine kreisrunde Öffnung (13) ist.

3. Optoelektronischer Sensor (1) nach mindestens einem der vorhergehenden Ansprüche, **dadurch gekennzeichnet, dass** der Lichtleiter (10) und die Blende (12) als Zweikomponenten-Spritzgussteil hergestellt ist.

4. Optoelektronischer Sensor (1) nach mindestens einem der vorhergehenden Ansprüche, **dadurch gekennzeichnet, dass** die Blende eine Blendenfolie ist.

5. Optoelektronischer Sensor (1) nach mindestens einem der vorhergehenden Ansprüche, **dadurch gekennzeichnet, dass** die Blende (12) eine lichtundurchlässige Beschichtung (14) des Lichteiters (10) ist.

6. Optoelektronischer Sensor (1) nach mindestens einem der vorhergehenden Ansprüche, **dadurch gekennzeichnet, dass** das optische Element (9) Fixierelemente (15) aufweist, um das optische Element (9) im optoelektronischen Sensor (1) zu positionieren.

7. Optoelektronischer Sensor (1) nach mindestens einem der vorhergehenden Ansprüche, **dadurch gekennzeichnet, dass** die Steuer- und Auswerteeinheit (8) dafür ausgebildet ist, anhand des Signals des Referenzlichtempfängers (11) eine Referenzmessung durchzuführen.

8. Optoelektronischer Sensor (1) nach mindestens einem der vorhergehenden Ansprüche, **dadurch gekennzeichnet, dass** der optoelektronische Sensor (1) ein entfernungsmessender Lichttaster nach dem Lichtlaufzeitprinzip ist, wobei die Steuer- und Auswerteeinheit (8) dafür ausgebildet ist, einen Objektabstand aus einer Lichtlaufzeit zwischen Aussenden des Sendelichts (5) und Empfang des reflektierten Sendelichts (5) zu bestimmen.

9. Optoelektronischer Sensor (1) nach mindestens einem der vorhergehenden Ansprüche, **dadurch gekennzeichnet, dass** das Sendelicht (5) Laserlicht ist.

10. Optoelektronischer Sensor (1) nach Anspruch 8, **dadurch gekennzeichnet, dass** die Steuer- und Auswerteeinheit (8) dazu ausgebildet ist, die gemessene Lichtlaufzeit anhand der Referenzmessung zu korrigieren.

## Claims

1. An optoelectronic sensor (1) for detecting objects (2) in a monitored zone (3) that has a light transmitter (4) for transmitting transmitted light (5), a light receiver (6) for generating a received signal from transmitted light (5) reflected by objects (2) in the monitored zone, a control and evaluation unit (8) for determining information on objects (2) in the monitored zone (3) with reference to the received signal, and an optical element (9) that is arranged in the optical path of the transmitted light (5) of the light transmitter (4) such that some of the transmitted light (5) enters into the monitored zone (3) as detection light,
**characterized in that**
the optical element (9) has a transparent light guide (10) that guides some of the transmitted light (5) to a reference light receiver (11); and **in that** the optical element (9) has a diaphragm (12) having an aperture (13) for the transmitted light (5), wherein the optoelectronic sensor (1) has a collimator lens (17), wherein the optical element (9) is arranged between the light emitter (4) and the collimator lens (17), wherein the light guide (10) is based on the effect of total reflection at interfaces, wherein the aperture (12) is located on a side or surface of the optical element (9) facing away from the light emitter (4), wherein between the aperture (12) and the light emitter (4) the light guide (10) is arranged, wherein after the light enters the light guide (10), the light is totally reflected several times at the interfaces and finally reaches the reference light receiver (11) via a coupling area, whereby the light guide (10) has diffractive and/or refractive structures at a coupling point for the transmitting light.

2. An optoelectronic sensor (1) in accordance with claim 1, **characterized in that** the aperture (13) is a circular aperture (13).

3. An optoelectronic sensor (1) in accordance with at least one of the preceding claims, **characterized in that** the light guide (10) and the diaphragm (12) are manufactured as a two-component injection molding.

4. An optoelectronic sensor (1) in accordance with at least one of the preceding claims, **characterized in that** the diaphragm is a diaphragm film.

5. An optoelectronic sensor (1) in accordance at least one of the preceding claims, **characterized in that** the diaphragm (12) is a light impermeable coating (14) of the light guide (10).

6. An optoelectronic sensor (1) in accordance with at least one of the preceding claims, **characterized in that** the optical element (9) has fixing elements (15) to position the optical element (9) in the optoelectronic sensor (1).

7. An optoelectronic sensor (1) in accordance with at least one of the preceding claims, **characterized in that** the control and evaluation unit (8) is configured to carry out a reference measurement with reference to the signal of the reference light receiver (11).

8. An optoelectronic sensor (1) in accordance with at least one of the preceding claims, **characterized in that** the optoelectronic sensor (1) is a distance measuring light sensor in accordance with the time of flight principle, with the control and evaluation unit (8) being configured to determine an object distance from a time of flight between the transmission of the transmitted light (5) and the reception of the reflected transmitted light (5).

9. An optoelectronic sensor in (1) in accordance at least one of the preceding claims, **characterized in that** the transmitted light (5) is laser light.

10. An optoelectronic sensor (1) in accordance with claim 8, **characterized in that** the **characterized in that** the control and evaluation unit (8) is configured to correct the measured time of flight with reference to the reference measurement.

## Revendications

1. Capteur optoélectronique (1) pour détecter des objets (2) dans une zone à surveiller (3), comportant un émetteur de lumière (4) pour émettre de la lumière d'émission (5), un récepteur de lumière (6) pour générer un signal de réception à partir de la lumière d'émission (5) réfléchie par des objets (2) dans la zone à surveiller, une unité de commande et d'évaluation (8) pour déterminer des informations sur des objets (2) dans la zone à surveiller (3) sur la base du signal de réception, ainsi qu'un élément optique (9) qui est disposé dans le chemin optique de la lumière d'émission (5) de l'émetteur de lumière (4) de telle sorte qu'une partie de la lumière d'émission (5) parvient en tant que lumière de détection dans la zone à surveiller (3),
**caractérisé en ce que**
l'élément optique (9) comprend un guide de lumière transparent (10) qui dirige une partie de la lumière d'émission (5) vers un récepteur de lumière de référence (11), et l'élément optique (9) comprend un diaphragme (12) avec une ouverture (13) pour la lumière d'émission (5), où le capteur optoélectronique (1) comprend une lentille collimateur (17), où l'élément optique (9) est disposé entre l'émetteur de lumière (4) et la lentille collimateur (17), où le guide de lumière (10) est basé sur l'effet de réflexion totale aux interfaces, où le diaphragme (12) est situé sur un côté ou une surface de l'élément optique (9) tournée à l'opposé de l'émetteur de lumière (4), où entre le diaphragme (12) et l'émetteur de lumière (4) le guide de lumière (10) est disposé, où, après que la lumière entre dans le guide de lumière (10), la lumière est totalement réfléchie plusieurs fois aux interfaces et atteint finalement le récepteur de lumière de référence (11) via une zone de couplage, où le guide de lumière (10) comprend des structures diffractives et/ou ré-fractives à un point de couplage pour la lumière d'émission .

2. Capteur optoélectronique (1) selon la revendication 1, **caractérisé en ce que** l'ouverture (13) est une ouverture circulaire (13).

3. Capteur optoélectronique (1) selon l'une au moins des revendications précédentes, **caractérisé en ce que** le guide de lumière (10) et le diaphragme (12) sont fabriqués sous forme de pièce moulée par injection à deux composants.

4. Capteur optoélectronique (1) selon l'une au moins des revendications précédentes, **caractérisé en ce que** le diaphragme est une feuille de diaphragme.

5. Capteur optoélectronique (1) selon l'une au moins des revendications précédentes, **caractérisé en ce que** le diaphragme (12) est un revêtement opaque (14) du guide de lumière (10).

6. Capteur optoélectronique (1) selon l'une au moins des revendications précédentes, **caractérisé en ce que** l'élément optique (9) comprend des éléments de fixation (15) pour positionner l'élément optique (9) dans le capteur optoélectronique (1).

7. Capteur optoélectronique (1) selon l'une au moins des revendications précédentes, **caractérisé en ce que** l'unité de commande et d'évaluation (8) est réalisée pour effectuer une mesure de référence sur la base du signal du récepteur de lumière de référence (11).

8. Capteur optoélectronique (1) selon l'une au moins des revendications précédentes, **caractérisé en ce que** le capteur optoélectronique (1) est un détecteur photoélectrique mesurant la distance selon le principe du temps de vol de lumière, l'unité de commande et d'évaluation (8) étant réalisée pour déterminer une distance d'objet à partir d'un temps de vol de lumière entre l'émission de la lumière d'émission (5) et la réception de la lumière d'émission réfléchie (5).

9. Capteur optoélectronique (1) selon l'une au moins des revendications précédentes, **caractérisé en ce que** la lumière d'émission (5) est une lumière laser.

10. Capteur optoélectronique (1) selon la revendication 8, **caractérisé en ce que** l'unité de commande et d'évaluation (8) est réalisée pour corriger le temps de vol de lumière mesuré sur la base de la mesure de référence.
